(19) Europäisches Patentamt
European Patent Office
Office européen des brevets

(11) EP 4 436 790 B1

(12) FASCICULE DE BREVET EUROPEEN

(45) Date de publication et mention de la délivrance du brevet:
**08.10.2025 Bulletin 2025/41**

(21) Numéro de dépôt: **22817652.5**

(22) Date de dépôt: **14.11.2022**

(51) Classification Internationale des Brevets (IPC):
***B60C 1/00*** *(2006.01)* ***C08L 47/00*** *(2006.01)*
***C08F 210/02*** *(2006.01)*

(52) Classification Coopérative des Brevets (CPC):
(C-Sets disponibles)
**B60C 1/0016; C08F 210/02; C08L 47/00** (Cont.)

(86) Numéro de dépôt international:
**PCT/EP2022/081699**

(87) Numéro de publication internationale:
**WO 2023/088811 (25.05.2023 Gazette 2023/21)**

(54) **COMPOSITION DE CAOUTCHOUC**

KAUTSCHUKZUSAMMENSETZUNG

RUBBER COMPOSITION

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **22.11.2021 FR 2112340**

(43) Date de publication de la demande:
**02.10.2024 Bulletin 2024/40**

(73) Titulaire: **COMPAGNIE GENERALE DES ETABLISSEMENTS MICHELIN**
**63000 Clermont-Ferrand (FR)**

(72) Inventeurs:
- **PIBRE, Guillaume**
**63040 CLERMONT-FERRAND CEDEX 09 (FR)**
- **FERRAND, Thomas**
**63040 CLERMONT-FERRAND CEDEX 09 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-03/016215** **WO-A1-03/016387**
**FR-A1- 3 100 815** **FR-A1- 3 104 595**

Il est rappelé que: Dans un délai de neuf mois à compter de la publication de la mention de la délivrance du brevet européen au Bulletin européen des brevets, toute personne peut faire opposition à ce brevet auprès de l’Office européen des brevets, conformément au règlement d’exécution. L’opposition n’est réputée formée qu’après le paiement de la taxe d’opposition. (Art. 99(1) Convention sur le brevet européen).

EP 4 436 790 B1

(52) Classification Coopérative des Brevets (CPC):
(Cont.)

C-Sets
**C08F 210/02, C08F 4/52;**
**C08L 47/00, C08L 91/06, C08K 9/06, C08K 3/36, C08K 3/04, C08K 5/31, C08K 5/548, C08K 5/09, C08K 3/22, C08K 5/18, C08K 3/06, C08K 5/47;**
C08F 210/02, C08F 236/06, C08F 2500/27

## Description

Le domaine de la présente invention est celui des compositions de caoutchouc qui comprennent une silice et un élastomère diénique fortement saturé et qui sont notamment destinées à être utilisées dans la fabrication de pneumatique.

Des compositions de caoutchouc renforcées d'une silice et comprenant un élastomère diénique fortement saturé sont connues des documents WO 2014114607 A1 et WO 2018224776 A1. L'élastomère diénique fortement saturé est un copolymère d'éthylène et d'un 1,3-diène comme le 1,3-butadiène et a la particularité de contenir plus de 50% en mole d'unité éthylène. En raison de sa teneur élevée en éthylène et de son faible taux d'unité diénique inférieur à 50% en mole, il se distingue largement des élastomères diéniques qui sont traditionnellement utilisés dans les compositions de caoutchouc et qui contiennent généralement plus de 50% en mole d'unité diénique, comme les polybutadiènes, les polyisoprènes et les copolymères de 1,3-butadiène ou d'isoprène et de styrène. Il a notamment la particularité de conférer à une composition de caoutchouc un compromis différent de propriétés entre la rigidité et l'hystérèse qui traduit un compromis de performance avantageux entre la résistance à l'usure et la résistance au roulement.

Les élastomères diéniques fortement saturés qui contiennent plus de 50% en mole d'unité éthylène ont la particularité de vulcaniser selon une cinétique plus lente que les élastomères diéniques fortement insaturés qui contiennent plus de 50% en moles d'unités diéniques. Des temps de séjour plus longs dans les presses de cuisson sont donc nécessaires pour vulcaniser les compositions de caoutchouc contenant les élastomères diéniques fortement saturés, ce qui se traduit par un temps d'occupation des presses plus long par composition de caoutchouc qui a pour conséquence de diminuer la productivité des sites de fabrication de pneumatiques.

Il existe donc un besoin de diminuer le temps sous presse de telles compositions de caoutchouc tout en conservant le compromis particulier de propriété entre la rigidité et l'hystérèse de ces compositions de caoutchouc.

Les inventeurs ont découvert que l'utilisation combinée d'une silice hydrophile et d'une silice préhydrophobée dans de telles compositions de caoutchouc permet de satisfaire ce besoin.

Ainsi, l'invention concerne une composition de caoutchouc qui comprend :

- un élastomère diénique fortement saturé qui est un copolymère d'éthylène et d'un 1,3-diène qui comprend des unités éthylène qui représentent plus de 50% en moles des unités monomères du copolymère,
- un système de vulcanisation,
- un agent de couplage silane,
- et une charge renforçante qui contient une silice préhydrophobée avant son utilisation dans la composition de caoutchouc par traitement avec un mercaptosilane, bloqué ou non, et une silice hydrophile.

L'invention concerne également un pneumatique qui comprend une composition de caoutchouc conforme à l'invention, préférentiellement dans sa bande de roulement.

## Description

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

L'abréviation "pce" signifie parties en poids pour cent parties d'élastomère (du total des élastomères si plusieurs élastomères sont présents).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.

Dans la présente invention, on entend par pneumatique (en anglais « tyre ») un bandage pneumatique ou non pneumatique. Un bandage pneumatique comporte usuellement deux bourrelets destinés à entrer en contact avec une jante, un sommet composé d'au moins une armature de sommet et une bande de roulement, deux flancs, le pneumatique étant renforcé par une armature de carcasse ancrée dans les deux bourrelets. Un bandage non-pneumatique, quant à lui, comporte usuellement une base, conçue par exemple pour le montage sur une jante rigide, une armature de sommet, assurant la liaison avec une bande de roulement et une structure déformable, tels que des rayons, nervures ou alvéoles, cette structure étant disposée entre la base et le sommet. De tels bandages non-pneumatiques ne comprennent pas nécessairement de flanc. Des bandages non-pneumatiques sont décrits par exemples dans les documents WO 03/018332 et FR2898077. Selon l'un quelconque des modes de réalisation de l'invention, le pneumatique selon l'invention est préférentiellement un bandage pneumatique.

Sauf indication contraire, les taux des unités résultant de l'insertion d'un monomère dans un copolymère tel que

le copolymère utile à l'invention sont exprimés en pourcentage molaire par rapport à la totalité des unités monomères du copolymère.

L'élastomère utile aux besoins de l'invention est un élastomère diénique fortement saturé, de préférence statistique, qui comprend des unités éthylène résultant de la polymérisation d'éthylène. De manière connue, l'expression « unité éthylène » fait référence au motif $-(CH_2-CH_2)-$ résultant de l'insertion de l'éthylène dans la chaîne élastomère. L'élastomère diénique fortement saturé est riche en unité éthylène, puisque les unités éthylène représentent plus de 50% en mole de l'ensemble des unités monomères de l'élastomère.

De préférence, l'élastomère diénique fortement saturé comprend au moins 60% molaire d'unité éthylène, préférentiellement au moins 65% molaire d'unité éthylène, plus préférentiellement au moins 70% molaire d'unités éthylène. Autrement dit, les unités éthylène dans l'élastomère diénique fortement saturé représentent préférentiellement au moins 60% en mole de l'ensemble des unités monomères de l'élastomère diénique fortement saturé, plus préférentiellement au moins 65% en mole de l'ensemble des unités monomères de l'élastomère diénique fortement saturé. De manière encore plus préférentielle, les unités éthylène représentent au moins 70% en mole de l'ensemble des unités monomères de l'élastomère diénique fortement saturé.

De préférence, les unités éthylène dans l'élastomère diénique fortement saturé représentent au plus 90% en mole de l'ensemble des unités monomères de l'élastomère diénique fortement saturé. De manière plus préférentielle, les unités éthylène représentent au plus 85% en mole de l'ensemble des unités monomères de l'élastomère diénique fortement saturé. De manière encore plus préférentielle, les unités éthylène représentent au plus 80% en mole de l'ensemble des unités monomères de l'élastomère diénique fortement saturé.

Selon un mode de réalisation avantageux, l'élastomère diénique fortement saturé comprend de 60% à 90% molaire d'unité éthylène, particulièrement de 60% à 85% molaire d'unité éthylène, pourcentage molaire calculé sur la base de l'ensemble des unités monomères de l'élastomère diénique fortement saturé. Plus avantageusement, l'élastomère diénique fortement saturé comprend de 60% à 80% molaire d'unité éthylène, pourcentage molaire calculé sur la base de l'ensemble des unités monomères de l'élastomère diénique fortement saturé.

Selon un autre mode de réalisation avantageux, l'élastomère diénique fortement saturé comprend de 65% à 90% molaire d'unité éthylène, particulièrement de 65% à 85% molaire d'unité éthylène, pourcentage molaire calculé sur la base de l'ensemble des unités monomères de l'élastomère diénique fortement saturé. Plus avantageusement, l'élastomère diénique fortement saturé comprend de 65% à 80% molaire d'unité éthylène, pourcentage molaire calculé sur la base de l'ensemble des unités monomères de l'élastomère diénique fortement saturé.

Selon encore un autre mode de réalisation avantageux de l'invention, l'élastomère diénique fortement saturé comprend de 70% à 90% molaire d'unité éthylène, particulièrement de 70% à 85% molaire d'unité éthylène, pourcentage molaire calculé sur la base de l'ensemble des unités monomères de l'élastomère diénique fortement saturé. Plus avantageusement, l'élastomère diénique fortement saturé comprend de 70% à 80% molaire d'unité éthylène, pourcentage molaire calculé sur la base de l'ensemble des unités monomères de l'élastomère diénique fortement saturé.

L'élastomère diénique fortement saturé étant un copolymère d'éthylène et d'un 1,3-diène comprend aussi des unités 1,3-diène résultant de la polymérisation d'un 1,3-diène. De manière connue, l'expression « unité 1,3-diène » ou « unité diénique » fait référence aux unités résultant de l'insertion du 1,3-diène par une addition 1,4, une addition 1,2 ou une addition 3,4 dans le cas de l'isoprène par exemple. Les unités 1,3-diène sont celles par exemple d'un 1,3-diène ayant 4 à 12 atomes de carbone, tels que le 1,3-butadiène, l'isoprène, le 1,3-pentadiène, un aryl-1,3-butadiène. De préférence, le 1,3-diène est le 1,3-butadiène ou un mélange de 1,3-diènes dont un est le 1,3-butadiène. De manière plus préférentielle, le 1,3-diène est le 1,3-butadiène, auquel cas l'élastomère diénique fortement saturé est un copolymère d'éthylène et de 1,3-butadiène, de préférence statistique.

L'élastomère diénique fortement saturé peut être obtenu selon différentes méthodes de synthèses connues de l'homme du métier, notamment en fonction de la microstructure visée de l'élastomère diénique fortement saturé. Généralement, il peut être préparé par copolymérisation au moins d'un 1,3-diène, de préférence le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224 au nom de la Demanderesse. L'élastomère diénique fortement saturé, y compris lorsqu'il est statistique, peut être préparé aussi par un procédé utilisant un système catalytique de type préformé comme ceux décrits dans les documents WO 2017093654 A1, WO 2018020122 A1 et WO 2018020123 A1. Avantageusement, l'élastomère diénique est statistique et est préparé préférentiellement selon un procédé semi continu ou continu tel que décrit dans les documents WO 2017103543 A1, WO 201713544 A1, WO 2018193193 et WO 2018193194.

L'élastomère diénique fortement saturé contient de préférence des unités de formule (I) ou des unités de formule (II).

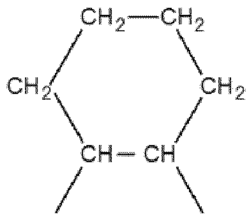

(I)

$-CH_2-CH(CH=CH_2)-$ (II)

La présence de motif cyclique saturé à 6 membres, 1,2-cyclohexanediyle, de formule (I) dans le copolymère peut résulter d'une série d'insertions très particulières de l'éthylène et du 1,3-butadiène dans la chaîne polymère au cours de sa croissance. Lorsque l'élastomère diénique fortement saturé comprend des unités de formule (I) ou des unités de formule (II), les pourcentages molaires des unités de formule (I) et des unités de formule (II) dans l'élastomère diénique fortement saturé, respectivement o et p, satisfont de préférence à l'équation suivante (eq. 1) ou à l'équation (eq. 2), o et p étant calculés sur la base de l'ensemble des unités monomères de l'élastomère diénique fortement saturé.

$$0 < o+p \leq 30 \quad \text{(eq. 1)}$$

$$0 < o+p < 25 \quad \text{(eq. 2)}$$

De préférence, l'élastomère diénique fortement saturé comprend des unités de formule (I) selon un taux molaire supérieur à 0% et inférieur à 15%, plus préférentiellement inférieur à 10% molaire, pourcentage molaire calculé sur la base de l'ensemble des unités monomères de l'élastomère diénique fortement saturé.

La composition de caoutchouc peut contenir en plus de l'élastomère diénique fortement saturé un deuxième élastomère diénique. On entend par élastomère diénique un élastomère constitué au moins en partie (i.e., un homopolymère ou un copolymère) d'unités monomères diènes (monomères porteurs de deux doubles liaisons carbone-carbone, conjuguées ou non). Le deuxième élastomère peut être choisi dans le groupe des élastomères diéniques fortement insaturés constitué par les polybutadiènes, les polyisoprènes, les copolymères de butadiène, les copolymères d'isoprène et leur mélange. On appelle un élastomère fortement insaturé un élastomère qui contient plus de 50% en mole d'unité diénique.

De préférence, le taux de l'élastomère diénique fortement saturé dans la composition de caoutchouc est d'au moins 50 parties en poids pour cent parties d'élastomère de la composition de caoutchouc (pce). De manière plus préférentielle, le taux de l'élastomère diénique fortement saturé dans la composition de caoutchouc varie dans un domaine allant de 80 à 100 pce. De manière encore plus préférentielle, il varie dans un domaine allant de 90 à 100 pce. Il est avantageusement de 100 pce. L'élastomère diénique fortement saturé peut être un seul élastomère diénique fortement saturé ou bien un mélange de plusieurs élastomères diéniques fortement saturés qui se différencient les uns des autres par leurs microstructures ou par leurs macrostructures. Dans le cas où la composition de caoutchouc contient plusieurs élastomères diéniques fortement saturés qui se différencient les uns des autres par leurs microstructures ou par leurs macrostructures, le taux de l'élastomère diénique fortement saturé dans la composition de caoutchouc se rapporte au mélange d'élastomères diéniques fortement saturés.

La charge renforçante de la composition de caoutchouc conforme à l'invention a pour caractéristique de comprendre deux natures différentes de silice qui se différencient l'une de l'autre par leur chimie de surface, puisque l'une est une silice hydrophile, l'autre une silice préhydrophobée, c'est-à-dire hydrophobée avant son utilisation dans la composition de caoutchouc.

De manière connue, une silice hydrophobée est une silice qui a subi un traitement qui consiste à modifier la chimie de surface de la silice avec un agent de modification pour la rendre moins hydrophile. Les agents de modification les plus connus sont typiquement des alkylsilanes, des alcoxysilanes ou des silazanes ou encore des mercaptosilanes, bloqués ou non. Les alcoxysilanes ou les mercaptosilanes connus comme agent de modification peuvent être les mêmes composés que ceux utilisés comme agent de couplage dans les compositions de caoutchouc. On peut par exemple se référer à la demande de brevet WO 2006110424 A1.

La silice utile aux besoins de l'invention est une silice préhydrophobée, puisque la chimie de surface de la silice est modifiée avant d'être utilisée dans la composition de caoutchouc conforme à l'invention. La silice est préhydrophobée par traitement avec un mercaptosilane, lequel traitement permet de greffer des fonctions thiol à la surface de la silice, les fonctions thiols pouvant être bloquées ou non. Un mercaptosilane dont la fonction thiol est bloquée est qualifié de mercaptosilane bloqué. Le traitement de la silice peut être réalisé selon le procédé décrit dans la demande de brevet WO

2006110424 A1.

La silice préhydrophobée peut être toute silice qui présente après sa modification par un mercaptosilane, bloqué ou non, une surface spécifique BET ou une surface spécifique CTAB inférieure à 450 $m^2/g$, de préférence comprise dans un domaine allant de 30 à 400 $m^2/g$, notamment de 60 à 300 $m^2/g$. Alternativement, la silice préhydrophobée peut être toute silice modifiée par un mercaptosilane, bloqué ou non, à partir d'une silice présentant une surface spécifique BET ou une surface spécifique CTAB inférieure à 450 $m^2/g$, de préférence comprise dans un domaine allant de 30 à 400 $m^2/g$, notamment de 60 à 300 $m^2/g$.

Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17]. Les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

La silice préhydrophobée est préférentiellement une silice précipitée qui est préhydrophobée, plus préférentiellement une silice précipitée hautement dispersible (dites « HDS » pour « highly dispersible » ou « highly dispersible silica ») préhydrophobée. Ces silices précipitées, hautement dispersibles ou non, et hydrophobées avant leur utilisation dans une composition de caoutchouc sont bien connues de l'homme du métier. On peut citer, par exemple, les silices commerciales de la société PPG sous les appellations commerciales « Agilon », « Ciptane » telles que la silice « Agilon 400 », la silice « Ciptane I », la silice « Ciptane LP ».

De préférence, le mercaptosilane est un composé qui a une fonctionalcoxysilyle ou halosilyle, de préférence alcoxysilyle, et une fonction thiol, bloquée ou non. De manière connue, une fonction alcoxysilyle est un groupe comportant un atome de silicium lié de façon covalente à un groupe alkoxy. De manière également connue, une fonction halosilyle est un groupe comportant un atome de silicium lié de façon covalente à un atome d'halogène.

Selon une première variante, le mercaptosilane est de formule (1)

$$HS\text{-}R\text{-}Si(L)_n(Q)_{3\text{-}n} \qquad (1)$$

L étant halogène ou OR', préférentiellement OR', Q hydrogène, un alkyle ayant 1 à 12 atomes de carbone ou un alkyle substitué par un atome d'halogène ayant 1 à 12 atomes de carbone, préférentiellement méthyle ou éthyle, R un alkylène ayant 1 à 12 atomes de carbone, préférentiellement méthylène ou propylène, R' un alkyle ayant 1 à 12 atomes de carbone ou un alkoxyalkyle ayant 2 à 12 atomes de carbone, préférentiellement méthoxy ou éthoxy, ledit halogène étant chlore, brome, iode ou fluore, et n étant égal à 1, 2 ou 3, préférentiellement 3. Par exemple, on peut citer le mercaptométhyltriméthoxysilane, mercaptoéthyltriméthoxysilane, mercaptopropyltriméthoxysilane, mercaptométhyltriéthoxysilane, mercaptoéthyltripropoxysilane, mercaptopropyltriéthoxysilane, (mercaptométhyl)diméthyléthoxysilane, (mercaptométhyl)méthyldiéthoxysilane, 3-mercaptopropyl-méthyldiméthoxysilane, le mélange de ces composés. Le mercaptosilane est avantageusement le mercaptopropyltriéthoxysilane ou le mercaptométhyltriéthoxysilane.

Selon une deuxième variante, la fonction thiol du mercaptosilane est bloquée par un groupe acyle. Selon cette variante, il est préférentiellement de formule (1) dans laquelle l'atome d'hydrogène lié de façon covalente à l'atome de soufre est remplacé par un groupe acyle. Le groupe acyle est préférentiellement un groupe de formule $R^0C(=O)$-, $R^0$ étant alkyle, plus préférentiellement n-alkyle ayant 2 à 12 atomes de carbone, encore plus préférentiellement n-alkyle ayant 6 à 8 atomes de carbone. A titre de mercaptosilanes bloqués pouvant convenir, on peut citer les composés thiols bloqués par un groupe acyle tels que le mercaptométhyltriméthoxysilane, le mercaptoéthyltriméthoxysilane, le mercaptopropyltriméthoxysilane, le mercaptométhyltriéthoxysilane, le mercaptoéthyltripropoxysilane, le mercaptopropyltriéthoxysilane, le (mercaptométhyl)diméthyléthoxysilane, le (mercaptométhyl)méthyldiéthoxysilane, le 3-mercaptopropyl-méthyldiméthoxysilane bloqués par un groupe acyle, ainsi que le mélange de ces composés thiols bloqués. Le groupe acyle est préférentiellement le groupe octanoyle $CH_3(CH_2)_6C(O)$-. Le mercaptosilane bloqué est avantageusement le 3-(octanoylthio)propyltriéthoxysilane.

La teneur massique à la surface de la silice préhydrophobée en fonction thiol (SH) ou en équivalent de fonction thiol dans le cas d'un mercaptosilane bloqué est comprise dans un domaine allant préférentiellement de 0.1 à 1%, plus préférentiellement de 0.4 à 1%, encore plus préférentiellement de 0.4 à 0.6%, pourcentage massique par rapport à la masse de la silice préhydrophobée.

La silice préhydrophobée a préférentiellement une surface spécifique CTAB allant de 100 à 200 $m^2/g$, plus préférentiellement de 120 à 160 $m^2/g$.

Par opposition à une silice hydrophobée, une silice hydrophile est de manière connue une silice dont la chimie de surface n'a pas été modifiée avant son utilisation par réaction des hydroxyles à sa surface pour la rendre moins hydrophile. A titre de silice hydrophile, on peut utiliser tout type de silice précipitée, notamment des silices précipitées hautement dispersibles (dites « HDS » pour « highly dispersible » ou « highly dispersible silica »). Ces silices précipitées, hautement

dispersibles ou non, sont bien connues de l'homme du métier. La silice hydrophile peut être toute silice hydrophile présentant une surface spécifique BET ou une surface spécifique CTAB inférieure à 450 $m^2/g$, de préférence comprise dans un domaine allant de 30 à 400 $m^2/g$, notamment de 60 à 300 $m^2/g$. On peut citer, par exemple, les silices décrites dans les demandes WO03/016215-A1 et WO03/016387-A1. Parmi les silices HDS commerciales, on peut notamment utiliser les silices « Ultrasil ® 5000GR », « Ultrasil ® 7000GR » de la société Evonik, les silices « Zeosil ® 1085GR », « Zeosil® 1115 MP », « Zeosil® 1165MP », « Zeosil® Premium 200MP », « Zeosil® HRS 1200 MP » de la Société Solvay. À titre de silice non HDS, les silices commerciales suivantes peuvent être utilisées : les silices « Ultrasil ® VN2GR », « Ultrasil ® VN3GR » de la société Evonik, la silice « Zeosil® 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

La silice hydrophile a préférentiellement une CTAB allant de 120 $m^2/g$ à 200 $m^2/g$, plus préférentiellement une CTAB allant de 140 $m^2/g$ à 200 $m^2/g$.

De préférence, la silice hydrophile a une CTAB supérieure à celle de la silice préhydrophobée.

La silice hydrophile est présente dans la composition de caoutchouc à un taux massique qui est préférentiellement supérieur ou égal à 50% de la masse totale de la silice hydrophile et de la silice préhydrophobée.

La charge renforçante peut comprendre tout type de charge dite renforçante autre que la silice préhydrophobée et la silice hydrophile, connue pour ses capacités à renforcer une composition de caoutchouc utilisable notamment pour la fabrication de pneumatiques, par exemple un noir de carbone. Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772. Ces noirs de carbone peuvent être utilisés à l'état isolé, tels que disponibles commercialement, ou sous tout autre forme, par exemple comme support de certains des additifs de caoutchouterie utilisés. Lorsque le noir de carbone est utilisé dans la composition de caoutchouc, il l'est de préférence à un taux inférieur ou égal à 10 pce (par exemple le taux de noir de carbone peut être compris dans un domaine allant de 1 à 10 pce). Avantageusement, le taux de noir de carbone dans la composition de caoutchouc est inférieur ou égal à 5 pce. Dans les intervalles indiqués, on bénéficie des propriétés colorantes (agent de pigmentation noir) et anti-UV des noirs de carbone, sans pénaliser par ailleurs les performances typiques apportées par la silice.

La silice préhydrophobée et la silice hydrophile représentent préférentiellement plus de 50% en masse de la charge renforçante. En d'autres termes, la quantité totale de la silice préhydrophobée et de la silice hydrophile dans la charge renforçante est supérieure à 50% en poids du poids total de la charge renforçante. De manière plus préférentielle, la silice préhydrophobée et la silice hydrophile représentent plus de 85% en masse de la charge renforçante.

Le taux total de charge renforçante peut varier dans un large domaine, par exemple de 30 pce à 150 pce. Selon un premier mode de réalisation, le taux total de charge renforçante varie dans un domaine allant de 30 pce à 60 pce. Selon un deuxième mode de réalisation, le taux total de charge renforçante varie dans un domaine allant de plus de 60 pce à 150 pce. Le premier mode de réalisation est préféré au deuxième mode de réalisation pour un usage de la composition de caoutchouc dans une bande de roulement ayant une très faible résistance au roulement. L'une quelconque de ces plages de taux total de charge renforçante peut s'appliquer à l'un quelconque des modes de réalisation de l'invention.

Pour coupler la silice hydrophile à l'élastomère diénique, on utilise de manière bien connue un agent de couplage (ou agent de liaison), un silane, au moins bifonctionnel destiné à assurer une connexion suffisante, de nature chimique et/ou physique, entre la silice hydrophile et l'élastomère diénique au cours de la préparation de la composition de caoutchouc. On utilise en particulier des organosilanes ou des polyorganosiloxanes au moins bifonctionnels. Par « bifonctionnel », on entend un composé possédant un premier groupe fonctionnel capable d'interagir avec la silice hydrophile et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles de la silice hydrophile et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, et les polyorganosiloxanes. Plus préférentiellement, l'organosilane est un organosilane polysulfuré, également désigné ci-après sous le terme de silane polysulfuré.

Les organosilanes polysulfurés, dits "symétriques" ou "asymétriques" selon leur structure particulière et également désignés ci-après sous le nom de silanes polysulfurés, sont par exemple décrits dans les demandes WO03/002648 (ou US 2005/016651) et WO03/002649 (ou US 2005/016650). Conviennent en particulier, sans que la définition ci-après soit limitative, des silanes polysulfurés répondant à la formule générale (2)

$$Z - A^1 - S_x - A^1 - Z \qquad (2)$$

dans laquelle :

- x est un entier de 2 à 8, de préférence de 2 à 5 ;
- les symboles $A^1$, identiques ou différents, représentent un radical hydrocarboné divalent (de préférence un groupement alkylène en $C_1$-$C_{18}$ ou un groupement arylène en $C_6$-$C_{12}$, plus particulièrement un alkylène en $C_1$-$C_{10}$, notamment en

$C_1$-$C_4$, en particulier le propylène) ;

- les symboles Z, identiques ou différents, répondent à l'une des trois formules ci-après:

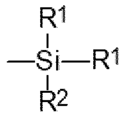 ; 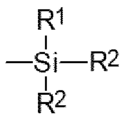 ; 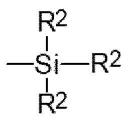

dans lesquelles :

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyles en $C_1$-$C_6$, cyclohexyle ou phényle, notamment des groupes alkyles en $C_1$-$C_4$, plus particulièrement le méthyle et/ou l'éthyle),
- les radicaux $R^2$, substitués ou non substitués, identiques ou différents entre eux, représentent un groupe alcoxyle en $C_1$-$C_{18}$ ou cycloalcoxyle en $C_5$-$C_{18}$ (de préférence un groupe choisi parmi alcoxyles en $C_1$-$C_8$ et cycloalcoxyles en $C_5$-$C_8$, plus préférentiellement encore un groupe choisi parmi alcoxyles en $C_1$-$C_4$, en particulier méthoxyle et éthoxyle).

Dans le cas d'un mélange d'alcoxysilanes polysulfurés répondant à la formule (2) ci-dessus, notamment des mélanges usuels disponibles commercialement, la valeur moyenne des "x" est un nombre fractionnaire de préférence compris entre 2 et 5, plus préférentiellement proche de 4.

A titre d'exemples de silanes polysulfurés, on citera plus particulièrement les polysulfures (notamment disulfures, trisulfures ou tétrasulfures) de bis-(alcoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ . La dénomination en $C_n$-$C_m$ qualifiant un groupe fait référence au nombre d'atomes de carbone constitutifs du groupe qui contient n à m atomes de carbone, n et m étant des nombres entiers avec m supérieur à n.

Parmi les silanes polysulfurés qui conviennent, on peut aussi citer les polysulfures d'hydroxysilane, par exemple décrits dans la demande de brevet WO 02/31041 (ou US 2004/051210).

Les POSS (polyorganosiloxanes) bifonctionnels sont par exemple décrits dans la demande de brevet WO 02/30939 (ou US 6,774,255).

Dans la composition de caoutchouc conforme à l'invention, le taux de l'agent de couplage silane est ajusté par l'homme du métier selon la structure chimique de l'agent de couplage, selon la surface spécifique de la silice hydrophile utilisée dans la composition de caoutchouc et selon le taux de silice hydrophile dans la composition de caoutchouc. Il est préférentiellement compris dans un domaine allant de 1 à 15 pce, plus préférentiellement de 1.5 à 10 pce, encore plus préférentiellement de 2 à 5 pce.

De préférence, l'agent de couplage silane est un silane polysulfuré répondant à la formule générale (2).

La composition de caoutchouc conforme à l'invention a pour autre caractéristique essentielle de contenir un système de vulcanisation, c'est-à-dire un système de réticulation à base de soufre. Le soufre est typiquement apporté sous forme de soufre moléculaire ou d'un agent donneur de soufre, de préférence sous forme moléculaire. Le soufre sous forme moléculaire est aussi désigné sous l'appellation de soufre moléculaire. On entend par donneur de soufre tout composé qui libère des atomes de soufre, combinés ou pas sous la forme d'une chaîne polysulfure, aptes à s'insérer dans les chaînes polysulfures formés au cours de la vulcanisation et pontant les chaînes élastomères. Au système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 4 pce, celui de l'accélérateur primaire est de préférence compris entre 0,5 et 5 pce. Ces taux préférentiels peuvent s'appliquer à l'un quelconque des modes de réalisation de l'invention.

On peut utiliser comme accélérateur de vulcanisation (primaire ou secondaire) tout composé susceptible d'agir comme accélérateur de vulcanisation des élastomères diéniques en présence de soufre, notamment des accélérateurs

du type thiazoles ainsi que leurs dérivés, des accélérateurs de types sulfénamides pour ce qui est des accélérateurs primaires, du type thiurames, dithiocarbamates, dithiophosphates, thiourées et xanthates pour ce qui est des accélérateurs secondaires. A titre d'exemples d'accélérateurs primaires, on peut citer notamment les composés sulfénamides tels que la N-cyclohexyl-2-benzothiazyle sulfénamide ("CBS"), la N,N-dicyclohexyl-2-benzothiazyle sulfénamide ("DCBS"), la N-ter-butyl-2-benzothiazyle sulfénamide ("TBBS"), et les mélanges de ces composés. L'accélérateur primaire est préférentiellement une sulfénamide, plus préférentiellement la N-cyclohexyl-2-benzothiazyle sulfénamide. A titre d'exemple d'accélérateurs secondaires, on peut citer notamment les disulfures de thiurame tels que le disulfure de tétraéthylthiurame, le disulfure de tétrabutylthiurame ("TBTD"), le disulfure de tétrabenzylthiurame ("TBZTD") et les mélanges de ces composés. L'accélérateur secondaire est préférentiellement un disulfure de thiurame, plus préférentiellement le disulfure de tétrabenzylthiurame.

La vulcanisation est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

La composition de caoutchouc conforme à l'invention peut comporter également tout ou partie des additifs usuels habituellement utilisés dans les compositions d'élastomères destinées à la fabrication de pneumatiques, notamment des pigments, des agents de protection tels que cires anti-ozone, anti-ozonants chimiques, anti-oxydants, des plastifiants tels que des huiles ou des résines plastifiantes.

La composition de caoutchouc, avant vulcanisation, peut être fabriquée dans des mélangeurs appropriés, en utilisant deux phases de préparation successives selon une procédure bien connue de l'homme du métier : une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le soufre ou le donneur de soufre et l'accélérateur de vulcanisation.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en œuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à cylindres, le tout est alors mélangé (phase productive) pendant quelques minutes, par exemple entre 2 et 15 min.

La composition de caoutchouc peut être calandrée ou extrudée sous la forme d'une feuille ou d'une plaque, notamment pour une caractérisation au laboratoire, ou encore sous la forme d'un semi-fini (ou profilé) de caoutchouc utilisable dans un pneumatique. La composition peut être soit à l'état cru (avant réticulation ou vulcanisation), soit à l'état cuit (après réticulation ou vulcanisation). Elle peut constituer tout ou partie d'un article semi-fini, en particulier destiné à être utilisé dans un bandage pneumatique ou non pneumatique qui comporte une bande de roulement, notamment dans la bande de roulement du bandage.

Les caractéristiques précitées de la présente invention, ainsi que d'autres, seront mieux comprises à la lecture de la description suivante de plusieurs exemples de réalisation de l'invention, donnés à titre illustratif et non limitatif.

## Exemples

Propriétés dynamiques

Les propriétés dynamiques G* et tanδ(max) sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz à 60°C. On effectue un balayage en amplitude de déformation de 0.1% à 100% (cycle aller), puis de 100% à 0.1% (cycle retour). Les résultats exploités sont le module complexe de cisaillement dynamique (G*) et le facteur de perte tanδ. Pour le cycle retour, on indique la valeur maximale de tanδ observée, noté tanδ(max).

Propriétés de vulcanisation :

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction vulcanisation. Les mesures sont traitées selon la norme DIN 53529 - partie 2 (mars 1983). Ti est le délai d'induction, c'est-à-dire le temps nécessaire au début de la réaction de vulcanisation. Tα (par exemple T95) est le temps nécessaire pour atteindre une conversion de α%, c'est-à-dire α% (par exemple 95%) de l'écart entre les

couples minimum et maximum.

Microstructure des élastomères par analyse de résonance magnétique nucléaire :

La microstructure des élastomères est déterminée par analyse RMN $^{1}H$, suppléée par l'analyse RMN $^{13}C$ lorsque la résolution des spectres RMN du $^{1}H$ ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone.

Pour les élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz.

Pour les mesures sur des élastomères solubles, est utilisée une sonde RMN liquide permettant d'observer le proton et le carbone en mode découplé du proton.

La préparation des échantillons non solubles est faite dans des rotors remplis avec le matériau analysé et un solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante. Les échantillons solubles sont mis en solution dans un solvant deutéré (environ 25mg d'élastomère dans 1mL), en général du chloroforme deutéré (CDCl3). Le solvant ou coupage de solvant utilisé doit toujours être deutéré et sa nature chimique peut être adaptée par l'homme du métier.

Dans les deux cas (échantillon soluble ou échantillon gonflé):
Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Les mesures de RMN sont réalisées à 25°C.

Température de transition vitreuse des polymères :

La température de transition vitreuse (Tg) est mesurée au moyen d'un calorimètre différentiel ("Differential Scanning Calorimeter") selon la norme ASTM D3418 (1999).

Viscosité Mooney :

La viscosité Mooney est mesurée à l'aide d'un consistomètre oscillant tel que décrit dans la norme ASTM D1646 (1999). La mesure se fait selon le principe suivant : l'échantillon analysé à l'état cru (i.e., avant cuisson) est moulé (mis en forme) dans une enceinte cylindrique chauffée à une température donnée (100°C). Après 1 minute de préchauffage, le rotor tourne au sein de l'éprouvette à 2 tours/minute et on mesure le couple utile pour entretenir ce mouvement après 4 minutes de rotation. La viscosité Mooney (ML) est exprimée en "unité Mooney" (UM, avec 1 UM=0,83 Newton.mètre).

Préparation des compositions de caoutchouc :

Quatre compositions de caoutchouc C1 à C4 sont préparées. On procède pour la fabrication de ces compositions de la manière suivante :
On introduit dans un mélangeur interne (taux de remplissage final : environ 70% en volume), dont la température initiale de cuve est d'environ 80°C, l'élastomère, puis la silice ou les silices, le cas échéant l'agent de couplage silane polysulfuré, ainsi que les divers autres ingrédients à l'exception du système de vulcanisation. On conduit alors un travail thermomécanique (phase non-productive) en une étape, qui dure environ 5 min à 6 minutes, jusqu'à atteindre une température maximale de « tombée » de 160°C. On récupère le mélange ainsi obtenu, on le refroidit puis on incorpore du soufre et un accélérateur type sulfénamide sur un mélangeur (homo-finisseur) à 23°C, en mélangeant le tout (phase productive) pendant un temps approprié (par exemple entre 5 et 12 min).

Les compositions de caoutchouc C1 à C4 contiennent toutes un élastomère diénique fortement saturé, l'élastomère E1, un système de vulcanisation, une charge renforçante comprenant une silice. La composition de

caoutchouc C1 est une composition témoin, la composition de caoutchouc C4 est une composition comparative.

Seules les compositions C2 et C3 sont conformes à l'invention, puisque la charge renforçante contient à la fois une silice hydrophile et une silice préhydrophobée par un traitement avec un mercaptosilane. La silice dans C1 est une silice hydrophile, la silice dans C4 est une silice préhydrophobée par un traitement avec un mercaptosilane. Le taux de l'agent de couplage silane polysulfuré, « Si69 », dans C1 à C3 est indexée sur la valeur de la surface spécifique (CTAB) de la silice hydrophile utilisé respectivement dans C1 à C3.

Les formulations (en pce) des compositions de caoutchouc C1 à C4 sont décrites dans le tableau 1. Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques après vulcanisation à 150°C (état cuit), soit sous la forme de profilés directement utilisables, après découpage et/ou assemblage aux dimensions souhaitées, par exemple comme produits semi-finis pour pneumatiques.

L'élastomère E1 est un copolymère d'éthylène et de 1,3-butadiène préparé selon le mode opératoire suivant : Dans un réacteur de 70 L contenant du méthylcyclohexane (64 L), de l'éthylène (5600 g) et du 1,3-butadiène (2948 g), on ajoute du butyloctylmagnésium (BOMAG) en solution dans le méthylcyclohexane et le système catalytique. Le ratio Mg/Nd est de 6.2. Le volume de la solution du système catalytique introduit est de 840 mL, la concentration de la solution du système catalytique en Nd étant 0.0065 M. La température de réaction est régulée à une température de 80°C et la réaction de polymérisation démarre. La réaction de polymérisation se déroule à une pression constante de 8.3 bars. Le réacteur est alimenté tout au long de la polymérisation en éthylène et en 1,3-butadiène dans les proportions molaires 73/27. La réaction de polymérisation est stoppée par refroidissement, dégazage du réacteur et ajout d'éthanol. Un anti-oxydant est ajouté à la solution de polymère. Le copolymère est récupéré après un stripping à la vapeur d'eau et séchage jusqu'à masse constante. La durée de polymérisation est de 225 minutes. La masse pesée (6.206 kg) permet de déterminer l'activité catalytique moyenne du système catalytique exprimée en kilogramme de polymère synthétisé par mole de métal néodyme et par heure (kg/mol.h). Le copolymère possède une valeur de ML égale à 62.

Le système catalytique est un système catalytique préformé. Il est préparé dans le méthylcyclohexane à partir d'un métallocène, le $[Me_2Si(Flu)_2Nd(\mu\text{-}BH_4)_2Li(THF)]$ à 0.0065 mol/L, d'un co-catalyseur, le butyloctylmagnésium (BOMAG) dont le ratio molaire BOMAG/Nd est égal à 2.2, et d'un monomère de préformation, le 1,3-butadiène dont le ratio molaire 1,3-butadiène/Nd est égal à 90. Le milieu est chauffé à 80°C sur une durée de 5h. Il est préparé selon une méthode de préparation conforme au paragraphe II.1 de la demande de brevet WO 2017093654 A1.

Les résultats des propriétés de cuisson et des propriétés dynamiques après cuisson des compositions de caoutchouc sont consignés dans le tableau 2. Les résultats sont exprimés en base 100 par rapport à un témoin. Une valeur supérieure à celle du témoin, arbitrairement fixée à 100, indique une grandeur mesurée supérieure à celle du témoin.

Les résultats montrent que les compositions C2 et C3 sont les compositions de caoutchouc qui ont un temps de cuisson (T95) aussi faible que la composition C4 et un niveau de rigidité et d'hystérèse comparable à la composition C1. En diminuant le temps de cuisson sous presse tout en maintenant le compromis de propriété entre la rigidité et l'hystérèse, l'utilisation combinée d'une silice hydrophile et d'une silice préhydrophobée par un traitement avec un mercaptosilane offre le meilleur compromis entre la productivité d'un site de fabrication de pneumatiques et les performances d'un pneumatique que sont la résistance à l'usure et la résistance au roulement.

Tableau 1

| Composition | C1 | C2 | C3 | C4 |
|---|---|---|---|---|
| E1 (1) | 100 | 100 | 100 | 100 |
| Silice (2) | | 9 | 18.5 | 37 |
| Silice (3) | 37 | 28 | 18.5 | |
| N234 (4) | 2 | 2 | 2 | 2 |
| DPG (5) | 1.2 | 1.2 | 1.2 | 1.2 |
| Agent de couplage (6) | 3.0 | 2.8 | 2.6 | |
| Acide stéarique (7) | 0.7 | 0.7 | 0.7 | 0.7 |
| ZnO (8) | 2.5 | 2.5 | 2.5 | 2.5 |
| 6PPD (9) | 2 | 2 | 2 | 2 |
| Cire Ozone (10) | 1 | 1 | 1 | 1 |
| Soufre | 1 | 1 | 1 | 1 |

(suite)

| Composition | C1 | C2 | C3 | C4 |
|---|---|---|---|---|
| CBS (11) | 1 | 1 | 1 | 1 |

(1) Copolymère d'éthylène et de 1,3-butadiène contenant 74% en mole de d'unité éthylène, 19% d'unité butadiène sous la forme de motifs 1,2 et 1,4 et 7% en mole de motif 1,2-cyclohexanediyle, de Tg -44°C
(2) « Agilon 400 » de la société PPG, CAS 112926-00-8, CTAB 140 $m^2$/g, silice préhydrophobée et fonctionnalisée thiol (-SH) à 0.5% en poids
(3) "Zeosil 1165 MP" de Solvay-Rhodia sous forme de microperles, CTAB 160 $m^2$/g, silice précipitée
(4) Noir de carbone de grade ASTM N234
(5) Diphénylguanidine « Perkacit DPG » de la société Flexsys
(6) Silane liquide triéthoxysilylpropyltétrasulfure (TESPT) « Si69 » de la société Evonik
(7) Acide stéarique « Pristerene 4931 » de la société Uniqema
(8) Oxyde de Zinc de grade industriel de la société Umicore
(9) N-(1,3-diméthylbutyl)-N'-phényl-p-phenylènediamine « Santoflex 6PPD » de la société Flexys
(10) Cire anti-ozone « VARAZON 4959 » de la société Sasol Wax
(11) N-cyclohexyl-2-benzothiazol-sulfénamide « Santocure CBS » de la société Flexsys

Tableau 2

| Composition | C1 | C2 | C3 | C4 |
|---|---|---|---|---|
| T95 à 150°C | 100 | 64 | 57 | 50 |
| G* 25% 60°C | 100 | 100 | 100 | 84 |
| tanδ(max)60°C | 100 | 104 | 100 | 107 |

**Revendications**

1. Composition de caoutchouc qui comprend :

   - un élastomère diénique fortement saturé qui est un copolymère d'éthylène et d'un 1,3-diène qui comprend des unités éthylène qui représentent plus de 50% en moles des unités monomères du copolymère,
   - un système de vulcanisation,
   - un agent de couplage silane,
   - et une charge renforçante qui contient une silice préhydrophobée avant son utilisation dans la composition de caoutchouc par traitement avec un mercaptosilane, bloqué ou non, et une silice hydrophile.

2. Composition de caoutchouc selon la revendication 1 dans laquelle le 1,3-diène est le 1,3-butadiène ou un mélange de 1,3-diènes dont un est le 1,3-butadiène, de préférence le 1,3-butadiène.

3. Composition de caoutchouc selon l'une quelconque des revendications 1 à 2 dans laquelle les unités éthylène dans l'élastomère diénique fortement saturé représentent au moins 60% en mole de l'ensemble des unités monomères de l'élastomère diénique fortement saturé, préférentiellement au moins 65% en mole de l'ensemble des unités monomères de l'élastomère diénique fortement saturé, plus préférentiellement au moins 70% en mole de l'ensemble des unités monomères de l'élastomère diénique fortement saturé.

4. Composition de caoutchouc selon l'une quelconque des revendications 1 à 3 dans laquelle les unités éthylène dans l'élastomère diénique fortement saturé représentent au plus 90% en mole de l'ensemble des unités monomères de l'élastomère diénique fortement saturé, préférentiellement au plus 85% en mole de l'ensemble des unités monomères de l'élastomère diénique fortement saturé, plus préférentiellement au plus 80% en mole de l'ensemble des unités monomères de l'élastomère diénique fortement saturé.

5. Composition de caoutchouc selon l'une quelconque des revendications 1 à 4 dans laquelle l'élastomère diénique fortement saturé est un copolymère statistique.

6. Composition de caoutchouc selon l'une quelconque des revendications 1 à 5 dans laquelle la silice préhydrophobée

et la silice hydrophile représentent plus de 50% en masse de la charge renforçante, préférentiellement plus de 85% en masse de la charge renforçante.

7. Composition de caoutchouc selon l'une quelconque des revendications 1 à 6 dans laquelle la silice préhydrophobée est une silice précipitée préhydrophobée.

8. Composition de caoutchouc selon l'une quelconque des revendications 1 à 7 dans laquelle le mercaptosilane est de formule $HS\text{-}R\text{-}Si(L)_n(Q)_{3-n}$ , L étant halogène ou OR', Q hydrogène, un alkyle ayant 1 à 12 atomes de carbone ou un alkyle substitué par un atome d'halogène ayant 1 à 12 atomes de carbone, R un alkylène ayant 1 à 12 atomes de carbone, R' un alkyle ayant 1 à 12 atomes de carbone ou un alkoxyalkyle ayant 2 à 12 atomes de carbone, ledit halogène étant chlore, brome, iode ou fluore, et n étant égal à 1, 2 ou 3.

9. Composition de caoutchouc selon l'une quelconque des revendications 1 à 8 dans laquelle la teneur massique à la surface de la silice préhydrophobée en fonction thiol (SH) ou en équivalent de fonction thiol dans le cas d'un mercaptosilane bloqué est comprise dans un domaine allant de 0.1 à 1%, préférentiellement de 0.4 à 1%, plus préférentiellement de 0.4 à 0.6%, pourcentage massique par rapport à la masse de la silice préhydrophobée.

10. Composition de caoutchouc selon l'une quelconque des revendications 1 à 9 dans laquelle la silice préhydrophobée a une surface spécifique CTAB allant de 100 à 200 $m^2/g$.

11. Composition de caoutchouc selon l'une quelconque des revendications 1 à 10 dans laquelle la silice hydrophile est présente à un taux massique supérieur ou égal à 50% de la masse totale de la silice hydrophile et de la silice préhydrophobée.

12. Composition de caoutchouc selon l'une quelconque des revendications 1 à 11 dans laquelle la silice hydrophile a une CTAB supérieure à celle de la silice préhydrophobée.

13. Composition de caoutchouc selon l'une quelconque des revendications 1 à 12 dans laquelle la silice hydrophile a une CTAB allant de 120 $m^2/g$ à 200 $m^2/g$.

14. Composition de caoutchouc selon l'une quelconque des revendications 1 à 13 dans laquelle l'agent de couplage silane est un silane polysulfuré.

15. Pneumatique qui comprend une composition de caoutchouc définie à l'une quelconque des revendications 1 à 14, préférentiellement dans sa bande de roulement.

**Patentansprüche**

1. Kautschukzusammensetzung, die Folgendes umfasst:

   - ein hochgesättigtes Dienelastomer, bei dem es sich um ein Copolymer von Ethylen und einem 1,3-Dien handelt, das Ethyleneinheiten umfasst, die mehr als 50 Mol-% der Monomereinheiten des Copolymers ausmachen,
   - ein Vulkanisationssystem,
   - ein Silan-Kupplungsmittel,
   - und einen verstärkenden Füllstoff, der eine vor ihrer Verwendung in der Kautschukzusammensetzung durch Behandlung mit einem blockierten oder unblockierten Mercaptosilan vorhydrophobierte Kieselsäure und eine hydrophile Kieselsäure enthält.

2. Kautschukzusammensetzung nach Anspruch 1, wobei es sich bei dem 1,3-Dien um 1,3-Butadien oder eine Mischung von 1,3-Dienen, von denen eines 1,3-Butadien ist, vorzugsweise 1,3-Butadien, handelt.

3. Kautschukzusammensetzung nach einem der Ansprüche 1 bis 2, wobei die Ethyleneinheiten in dem hochgesättigten Dienelastomer mindestens 60 Mol-% aller der Monomereinheiten des hochgesättigten Dienelastomers, bevorzugt mindestens 65 Mol-% aller der Monomereinheiten des hochgesättigten Dienelastomers, weiter bevorzugt mindestens 70 Mol-% aller der Monomereinheiten des hochgesättigten Dienelastomers, ausmachen.

4. Kautschukzusammensetzung nach einem der Ansprüche 1 bis 3, wobei die Ethyleneinheiten in dem hochgesättigten

Dienelastomer höchstens 90 Mol-% aller der Monomereinheiten des hochgesättigten Dienelastomers, bevorzugt höchstens 85 Mol-% aller der Monomereinheiten des hochgesättigten Dienelastomers, weiter bevorzugt höchstens 80 Mol-% aller der Monomereinheiten des hochgesättigten Dienelastomers, ausmachen.

**5.** Kautschukzusammensetzung nach einem der Ansprüche 1 bis 4, wobei es sich bei dem hochgesättigten Dienelastomer um ein statistisches Copolymer handelt.

**6.** Kautschukzusammensetzung nach einem der Ansprüche 1 bis 5, wobei die vorhydrophobierte Kieselsäure und die hydrophile Kieselsäure mehr als 50 Massen-% des verstärkenden Füllstoffs, bevorzugt mehr als 85 Massen-% des verstärkenden Füllstoffs, ausmachen.

**7.** Kautschukzusammensetzung nach einem der Ansprüche 1 bis 6, wobei es sich bei der vorhydrophobierten Kieselsäure um eine vorhydrophobierte Fällungskieselsäure handelt.

**8.** Kautschukzusammensetzung nach einem der Ansprüche 1 bis 7, wobei das Mercaptosilan die Formel $HS-R-Si(L)_n(Q)_{3-n}$ aufweist, wobei L für Halogen oder OR' steht, wobei Q für Wasserstoff, ein Alkyl mit 1 bis 12 Kohlenstoffatomen oder ein durch ein Halogenatom substituiertes Alkyl mit 1 bis 12 Kohlenstoffatomen steht, wobei R für ein Alkylen mit 1 bis 12 Kohlenstoffatomen steht, wobei R' für ein Alkyl mit 1 bis 12 Kohlenstoffatomen oder ein Alkoxyalkyl mit 2 bis 12 Kohlenstoffatomen steht, wobei es sich bei dem Halogen um Chlor, Brom, Iod oder Fluor handelt, und wobei n gleich 1, 2 oder 3 ist.

**9.** Kautschukzusammensetzung nach einem der Ansprüche 1 bis 8, wobei der Massengehalt an Thiolfunktionen (SH) oder an Thiolfunktionsäquivalent im Fall eines blockierten Mercaptosilans an der Oberfläche der vorhydrophobierten Kieselsäure in einem Bereich von 0,1 bis 1 %, bevorzugt 0,4 bis 1 %, weiter bevorzugt 0,4 bis 0,6 %, als Massenprozentanteil bezogen auf die Masse der vorhydrophobierten Kieselsäure, liegt.

**10.** Kautschukzusammensetzung nach einem der Ansprüche 1 bis 9, wobei die vorhydrophobierte Kieselsäure eine spezifische CTAB-Oberfläche von 100 bis 200 $m^2/g$ aufweist.

**11.** Kautschukzusammensetzung nach einem der Ansprüche 1 bis 10, wobei die hydrophile Kieselsäure in einem Massenanteil größer oder gleich 50 % der Gesamtmasse der hydrophilen Kieselsäure und der vorhydrophobierten Kieselsäure vorliegt.

**12.** Kautschukzusammensetzung nach einem der Ansprüche 1 bis 11, wobei die hydrophile Kieselsäure eine größere CTAB aufweist als die vorhydrophobierte Kieselsäure.

**13.** Kautschukzusammensetzung nach einem der Ansprüche 1 bis 12, wobei die hydrophile Kieselsäure eine CTAB von 120 $m^2/g$ bis 200 $m^2/g$ aufweist.

**14.** Kautschukzusammensetzung nach einem der Ansprüche 1 bis 13, wobei es sich bei dem Silan-Kupplungsmittel um ein Silanpolysulfid handelt.

**15.** Reifen, der eine Kautschukzusammensetzung gemäß einem der Ansprüche 1 bis 14 umfasst, bevorzugt in seiner Lauffläche.

## Claims

**1.** Rubber composition which comprises:

- a highly saturated diene elastomer which is a copolymer of ethylene and of a 1,3-diene which comprises ethylene units which represent more than 50 mol% of the monomer units of the copolymer,
- a vulcanization system,
- a silane coupling agent,
- and a reinforcing filler which contains a silica made hydrophobic, before its use in the rubber composition, by treatment with a blocked or non-blocked mercaptosilane, and a hydrophilic silica.

**2.** Rubber composition according to Claim 1, in which the 1,3-diene is 1,3-butadiene or a mixture of 1,3-dienes, one of

which is 1,3-butadiene, preferably 1,3-butadiene.

3. Rubber composition according to either one of Claims 1 to 2, in which the ethylene units in the highly saturated diene elastomer represent at least 60 mol% of all of the monomer units of the highly saturated diene elastomer, preferentially at least 65 mol% of all of the monomer units of the highly saturated diene elastomer, more preferentially at least 70 mol% of all of the monomer units of the highly saturated diene elastomer.

4. Rubber composition according to any one of Claims 1 to 3, in which the ethylene units in the highly saturated diene elastomer represent at most 90 mol% of all of the monomer units of the highly saturated diene elastomer, preferentially at most 85 mol% of all of the monomer units of the highly saturated diene elastomer, more preferentially at most 80 mol% of all of the monomer units of the highly saturated diene elastomer.

5. Rubber composition according to any one of Claims 1 to 4, in which the highly saturated diene elastomer is a statistical copolymer.

6. Rubber composition according to any one of Claims 1 to 5, in which the silica made hydrophobic beforehand and the hydrophilic silica represent more than 50% by mass of the reinforcing filler, preferentially more than 85% by mas of the reinforcing filler.

7. Rubber composition according to any one of Claims 1 to 6, in which the silica made hydrophobic beforehand is a precipitated silica made hydrophobic beforehand.

8. Rubber composition according to any one of Claims 1 to 7, in which the mercaptosilane is of formula $HS-R-Si(L)_n(Q)_{3-n}$, L being halogen or -OR', Q being hydrogen, an alkyl having 1 to 12 carbon atoms or an alkyl substituted with a halogen atom, having 1 to 12 carbon atoms, R being an alkylene having 1 to 12 carbon atoms, R' being an alkyl having 1 to 12 carbon atoms or an alkoxyalkyl having 2 to 12 carbon atoms, said halogen being chlorine, bromine, iodine or fluorine, and n being 1, 2 or 3.

9. Rubber composition according to any one of Claims 1 to 8, in which, at the surface of the silica made hydrophobic beforehand, the content by mass of thiol functions (SH) or of thiol function equivalent in the case of a blocked mercaptosilane is within a range extending from 0.1 to 1%, preferentially from 0.4 to 1%, more preferentially from 0.4 to 0.6%, percentage by mass relative to the mass of the silica made hydrophobic beforehand.

10. Rubber composition according to any one of Claims 1 to 9, in which the silica made hydrophobic beforehand has a CTAB specific surface area extending from 100 to 200 $m^2/g$.

11. Rubber composition according to any one of Claims 1 to 10, in which the hydrophilic silica is present in a content by mass of greater than or equal to 50% of the total mass of the hydrophilic silica and the silica made hydrophobic beforehand.

12. Rubber composition according to any one of Claims 1 to 11, in which the hydrophilic silica has a CTAB greater than that of the silica made hydrophobic beforehand.

13. Rubber composition according to any one of Claims 1 to 12, in which the hydrophilic silica has a CTAB extending from 120 $m^2/g$ to 200 $m^2/g$.

14. Rubber composition according to any one of Claims 1 to 13, in which the silane coupling agent is a silane polysulfide.

15. Tyre which comprises a rubber composition defined in any one of Claims 1 to 14, preferentially in its tread.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2014114607 A1
- WO 2018224776 A1
- WO 03018332 A
- FR 2898077
- EP 1092731 A
- WO 2004035639 A
- WO 2007054223 A
- WO 2007054224 A
- WO 2017093654 A1
- WO 2018020122 A1
- WO 2018020123 A1
- WO 2017103543 A1
- WO 201713544 A1
- WO 2018193193 A
- WO 2018193194 A
- WO 2006110424 A1
- WO 03016215 A1
- WO 03016387 A1
- WO 03002648 A
- US 2005016651 A
- WO 03002649 A
- US 2005016650 A
- WO 0231041 A
- US 2004051210 A
- WO 0230939 A
- US 6774255 B

### Littérature non-brevet citée dans la description

- **BRUNAUER-EMMETT-TELLER**. *The Journal of the American Chemical Society*, February 1938, vol. 60, 309